# FASCICULE DE BREVET EUROPEEN

(11) **EP 0 458 702 B1**
(45) Date de publication et mention de la délivrance du brevet: **10.08.1994**
(21) Numéro de dépôt: 91401329.7
(22) Date de dépôt: 23.05.1991
(51) Int. Cl.: B60Q 1/076

(54) **Actionneur, notamment pour la commande d'orientation d'un projecteur de véhicule automobile**
Steuereinrichtung der Lichtstrahlrichtung eines Fahrzeugscheinwerfers
Control device, in particular for the direction of a vehicle headlamp beam

(30) Priorité: 25.05.1990 FR 9006515
(43) Date de publication de la demande: 27.11.1991
(73) Titulaire: VALEO VISION, 93012 Bobigny Cédex (FR)
(72) Inventeur: Cantin, Jean-Pierre, F-91530 St. Cheron (FR); Hallier, Gérard, F-91290 Arpajon (FR)
(74) Mandataire: Gamonal, Didier

(56) Documents cités:
- EP-A- 0 171 318
- FR-A- 2 499 916

## Description

La présente invention concerne un actionneur, notamment pour la commande d'orientation d'un projecteur de véhicule automobile, du genre comprenant un corps comportant un boîtier fermé par un couvercle, une tige coulissante de manoeuvre logée dans le corps et traversant une paroi frontale du boîtier, un moteur électrique réversible monté dans le corps pour actionnement de la tige coulissante par l'intermédiaire d'un dispositif de transmission mécanique doté d'un entraîneur de forme creuse avec un alésage interne en prise avec la tige.

Un tel actionneur est décrit dans la demande EP 0 291 379, le corps servant de support pour les constituants de l'actionneur et la tige à manoeuvrer dans ce cas le projecteur.

Dans celui-ci, l'entraîneur est solidaire d'une roue présentant un pion pour montage tourillonnant dans un palier solidaire du couvercle. Ce couvercle subit des déformations lors du coulissement de la tige, en sorte que le déplacement de la tige n'est pas aussi précis que souhaité.

En outre, le montage du pion de la roue dans son palier nécessite de prendre des précautions, notamment au niveau des tolérances de fabrications, afin que le couvercle vienne fermer le boîtier tout en supportant ladite roue. Il y a donc toute une chaîne de cotes géométriques à respecter.

La présente invention a pour objet de pallier ces inconvénients, et donc de créer un nouvel actionneur à fonctionnement plus précis et d'un assemblage simplifié, tout en procurant d'autres avantages.

Suivant l'invention, un actionneur du type susindiqué est caractérisé en ce que le boîtier porte intérieurement en saillie, au moins une paroi latérale, et en ce que ladite paroi latérale est conformée pour supporter un élément intermédiaire appartenant au dispositif de transmission mécanique et venant en prise avec l'entraîneur, ledit élément intermédiaire s'étendant transversalement par rapport à l'entraîneur et à la tige coulissante.

Grâce à l'invention, l'élément intermédiaire est porté par le boîtier, en sorte que le couvercle ne subit pas de déformation lors de l'actionnement de la tige, dont la précision de manoeuvre est ainsi accrue.

En outre le couvercle vient fermer le boîtier sans interférer avec l'élément intermédiaire, ce qui facilite l'assemblage de l'actionneur. De plus, le positionnement de l'élément intermédiaire est plus aisé car il ne fait pas appel au couvercle. La chaîne des cotes est donc plus facile à respecter.

Avantageusement, cette paroi latérale est portée par la paroi frontale du boîtier.

Suivant une autre caractéristique, la paroi frontale du boîtier porte en saillie, à l'intérieur dudit boîtier une deuxième paroi latérale, les deux parois latérales s'étendant de part et d'autre de l'entraîneur et de la tige.

Grâce à cette disposition, l'élément intermédiaire peut comporter une roue supportée transversalement par lesdites parois latérales et venant en prise avec une crémaillère, que comporte l'entraîneur à cet effet.

Il en résulte que le rendement de l'actionneur peut être accru et que suivant une caractéristique le boîtier peut comporter trois zones, à savoir une première zone pour montage du circuit imprimé associé au moteur de l'actionneur, une deuxième zone supportant l'élément intermédiaire, et une troisième zone pour montage d'un bloc vis-roue venant en prise d'une part, avec l'élément intermédiaire, et d'autre part, une vis sans fin solidaire de l'arbre du moteur.

Le boîtier peut porter ainsi la majeure partie des constituants de l'actionneur.

Suivant une autre caractéristique la paroi frontale du boîtier porte un manchon axial pour montage du moteur électrique par enfilage axial et le boîtier comporte un épaulement pour retenue du moteur.

Grâce à cette disposition, il est tiré parti du couvercle pour immobiliser axialement le moteur s'étendant alors parallèlement à la tige.

Suivant une autre caractéristique, le circuit imprimé peut comporter un connecteur doté de broches saillantes propres à traverser le boîtier et comportant une lèvre d'étanchéité.

Grâce à cette disposition, le circuit imprimé étant porté par le boîtier grâce à des moyens d'immobilisation formant rail de guidage et solidaires de celui-ci, lors de l'assemblage de l'actionneur, le couvercle vient refermer le boîtier en assurant l'étanchéité dudit connecteur.

La description qui va suivre illustre l'invention à titre d'exemple en référence aux dessins annexés dans lesquels :
- la figure 1 est une vue en élévation de l'actionneur selon l'invention ;
- la figure 2 est une vue montrant la face arrière de l'actionneur de la figure 1 ;
- la figure 3 est une vue en coupe axiale de l'actionneur ;
- la figure 4 est une vue analogue à la figure 2, mais sans la présence du couvercle et des organes portés par celui-ci et sans la tige ;
- la figure 5 est une vue en coupe montrant l'assemblage du connecteur du circuit imprimé avec le couvercle ;
- la figure 6 est une vue en coupe montrant l'actionneur ;
- la figure 7 est une vue selon la ligne 7-7 de la figure 6 ;
- la figure 8 est une vue montrant un détail repéré par l'encart 8 de la figure 6 ;
- la figure 9 est une vue montrant l'intérieur du boîtier pour une deuxième variante de réalisation ;
- la figure 10 est une vue selon la ligne 10-10 de la figure 9 ;
- la figure 11 est une vue montrant la face avant du boîtier ;
- la figure 12 est une vue selon la ligne 12-12 de la figure 9 ;
- la figure 13 est une vue selon la ligne 13-13 de la figure 9 ;
- la figure 14 est une vue montrant le circuit imprimé ;
- la figure 15 est une vue montrant le connecteur du circuit imprimé ;
- la figure 16 est une vue montrant la lèvre d'étanchéité du connecteur.

L'actionneur décrit en référence aux dessins annexés est un actionneur pour la commande d'orientation d'un projecteur de véhicule automobile.

Cet actionneur comprend un corps creux, pour support des constituants de l'actionneur, sous forme d'un boîtier 1 fermé par un couvercle 2. Le boîtier 1 est doté d'une paroi frontale 13, qui porte en saillie axiale un nez cranté 45 pour montage sur le projecteur du véhicule automobile.

Ici le boîtier 1 et le couvercle 2 sont en matière plastique, tel que du polyamide chargé de fibres de verre, et sont assemblés de manière étanche par clipsage; le boîtier 1 portant, de manière connue en soi, des ergots crantés 46 et le couvercle 2 des dents et des échancrures pour passage des ergots 46, avec intervention de joints 14. Le couvercle 2 coiffe le boîtier 1 à l'exception du nez 45.

Une tige coulissante de manoeuvre 4, pour manoeuvre du projecteur, est logée dans le corps 1,2 et traverse la paroi frontale 13 du boîtier 1 ainsi que le nez 45. Ainsi qu'on le sait, le projecteur, notamment une partie optique de celui-ci, peut occuper plusieurs positions angulaires; la tige 4 agissant, selon les normes européennes, sur le réflecteur pivotant de celui-ci.

Un moteur électrique réversible 8 est monté dans le corps 1,2 pour actionnement de la tige coulissante 4 par l'intermédiaire d'un dispositif de transmission mécanique doté d'un entraîneur 3 de forme creuse avec un alésage interne en prise avec la tige 4.

L'extrémité libre de la tige 4 est de forme sphérique pour coopération avec le projecteur, dont l'inclinaison est réglée à l'aide de la tige 4.

Suivant l'invention un actionneur du type susindiqué est caractérisé en ce que le boîtier 1 porte intérieurement en saillie au moins une paroi latérale 16, et en ce que ladite paroi latérale 16 est conformée pour supporter un élément intermédiaire 5 appartenant au dispositif de transmission mécanique et venant en prise avec l'entraîneur 3, ledit élément intermédiaire 5 s'étendant transversalement par rapport à l'entraîneur 3 et à la tige coulissante 4.

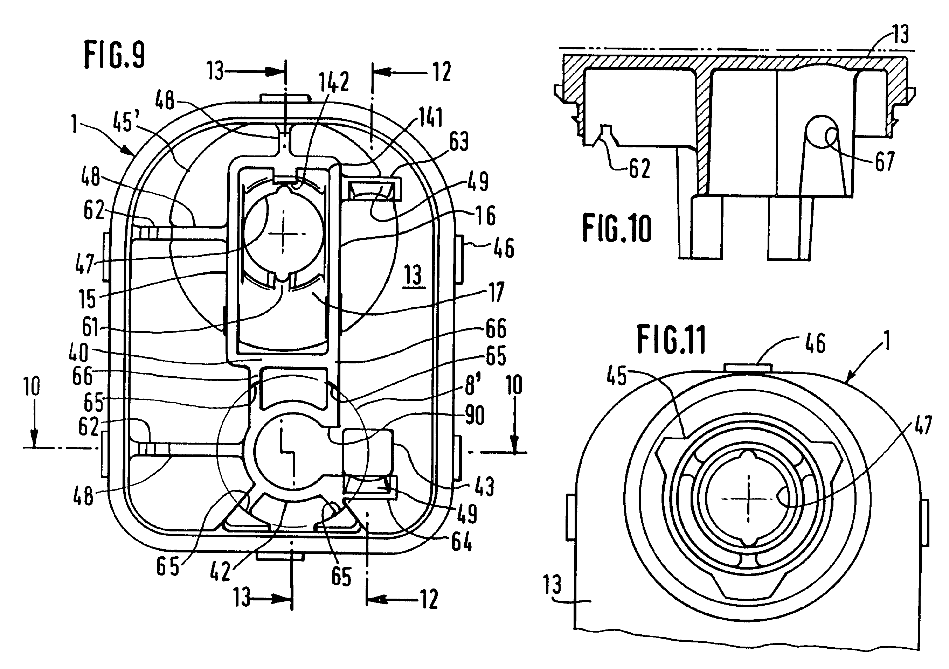

Ici, c'est la paroi frontale 13 qui porte en saillie la paroi 16, s'étendant parallèlement à la tige 4 mobile axialement et aux parois latérales du boîtier (figures 4 et 9) du côté opposé au nez 45.

Dans les figures 4 et 9, la paroi frontale 13 porte en saillie, une deuxième paroi latérale 15, parallèle à la première paroi 16 ; les deux parois latérales 15,16 s'étendant axialement de part et d'autre de l'entraîneur 3 et de la tige 4.

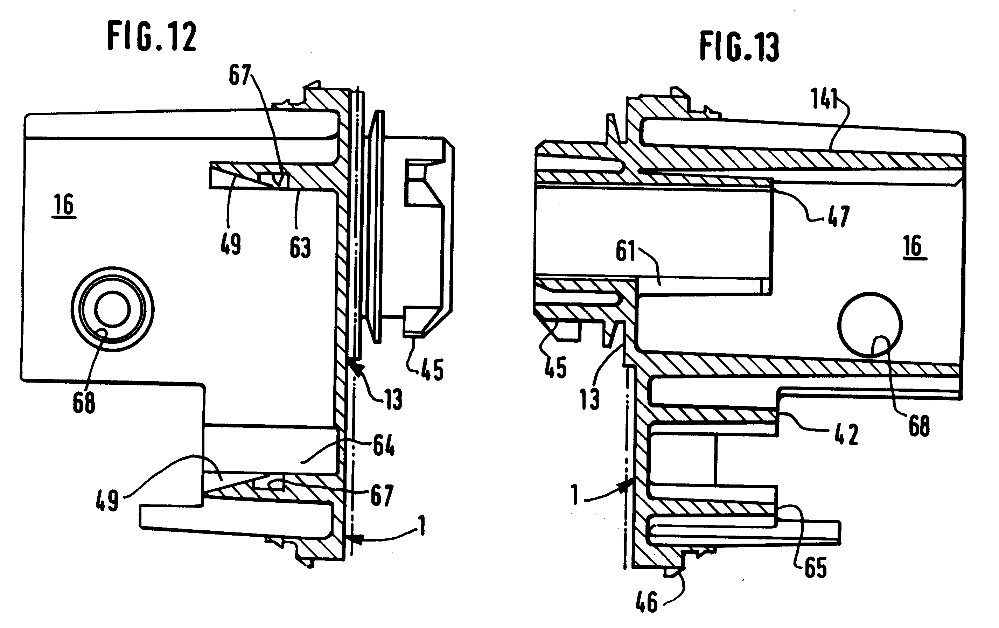

L'élément intermédiaire 5 comporte une petite roue 93 et une grande roue 9. La petite roue 93 est propre à venir en prise avec une crémaillère 33 portée par l'entraîneur 3. Cet entraîneur 3 est monté coulissant axialement dans un manchon cylindrique 47 solidaire de la paroi 13 et du nez 45, des nervures, visibles à la figure 11, reliant ce manchon au nez 45.

A la figure 4, la paroi sommitale de ce manchon 47 appartient à une paroi semi-circulaire 41 reliant entre elles les deux parois 15,16. On notera (figure 3) que la paroi 41 s'étend axialement au-delà du manchon 47 proprement dit.

A la figure 9, le manchon 47 est dictinct de la paroi 141 ici de forme plane. Cette paroi 141 s'étend radialement et axialement au-delà du manchon 47.

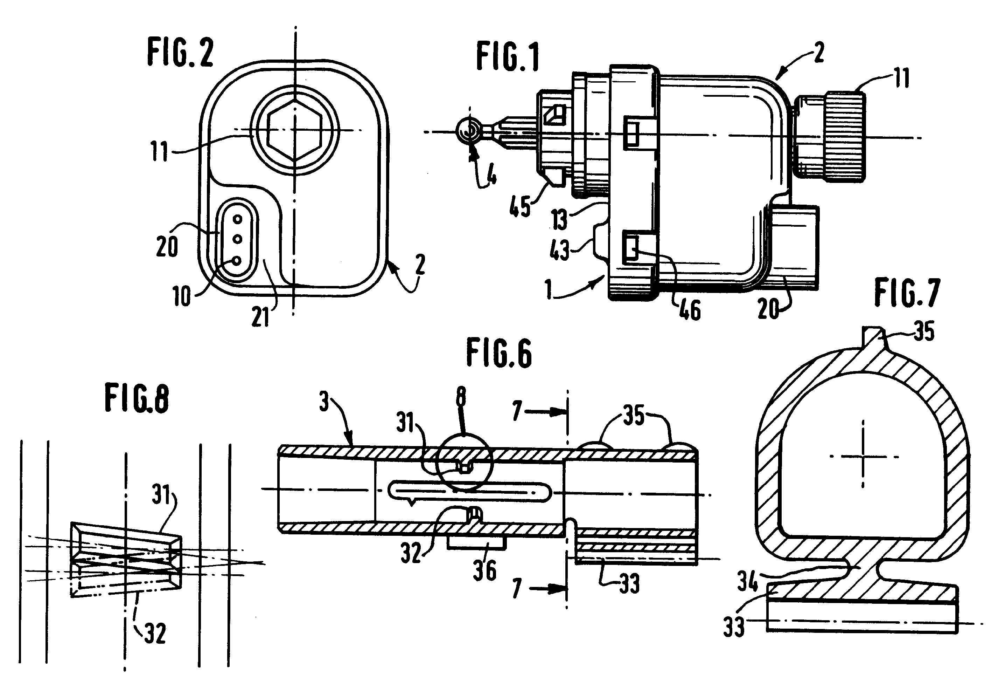

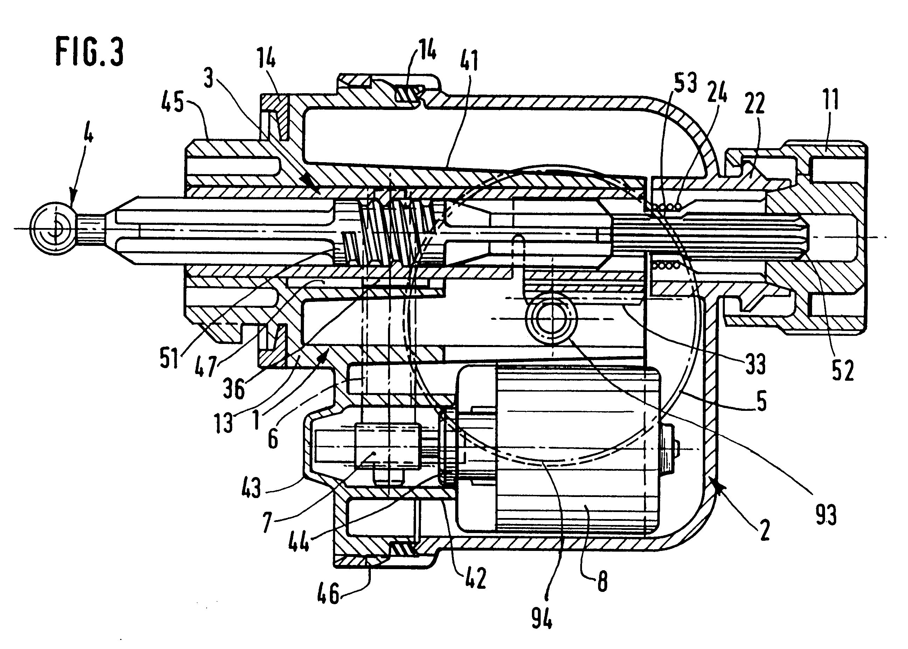

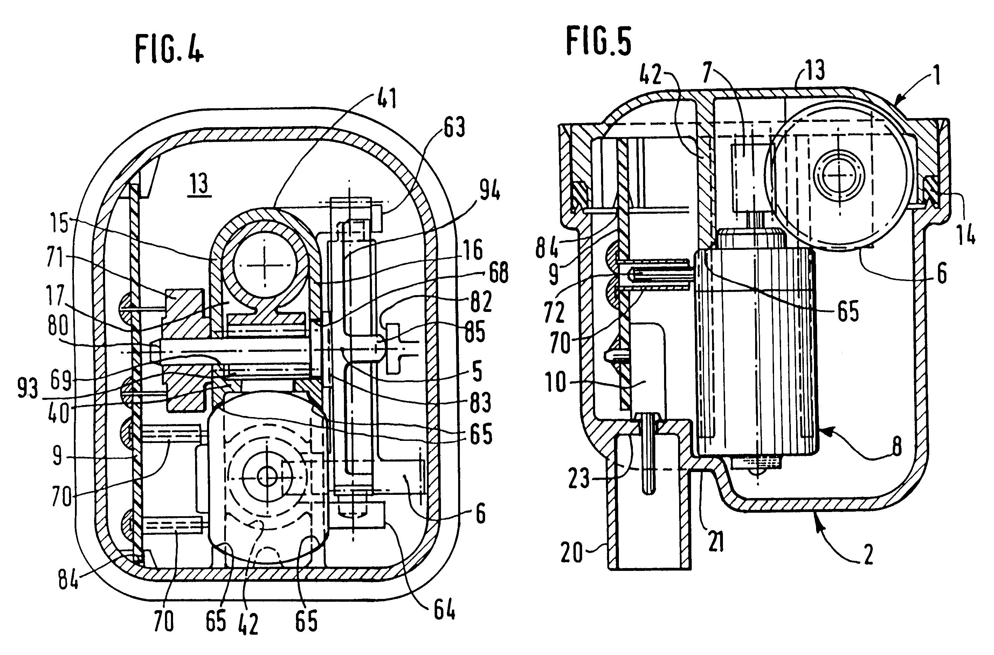

La face arrière du manchon 47, d'orientation axiale, est dotée d'une rainure 61 ouverte axialement. Cette rainure 61 est propre à coopérer avec un bossage 36 solidaire de l'entraîneur 3 et visible sur les figures 3 et 6.

Grâce à cette disposition l'entraîneur 3 est monté mobile en translation par rapport au boîtier 1 en étant fixe en rotation par rapport à celui-ci, tout en entourant la tige 4.

A la figure 6, l'entraîneur 3 est de forme creuse et son alésage interne porte deux saillies 31 et 32 inclinées tel que visible à la figure 8, par l'intermédiaire desquelles ledit entraîneur 3 vient en prise avec la tige 4.

Ces saillies 31 et 32 sont propres à coopérer avec une rainure 51 de forme hélicoïdale formée sur une portion de la tige 4 (figure 3) pour déplacement en translation de ladite tige 4.

La face arrière de l'entraîneur 3, celle la plus éloignée du nez 45, porte la crémaillère 33. Celle-ci est reliée par un pied, sous forme de nervure axiale 34, à la partie principale de l'entraîneur 3 élargie localement au niveau de la crémaillère, avec une paroi parallèle à la crémaillère (figure 7) et portant centralement la nervure 34.

L'entraîneur 3 porte en position globalement diamétralement opposée par rapport à la crémaillère 33 (figures 6 et 7) deux bossages bombés 35. Ces bossages sont propres à coopérer avec la paroi 41,141 (figures 4 et 9) reliant entre elles les deux parois latérales 15,16. A la figure 4 ces bossages 35 coopèrent directement avec la paroi semi-circulaire 41 tandis qu'à la figure 9 ils coopèrent avec une barrette centrale longitudinale 142 solidaire de la paroi 141.

La barrette 142 est saillante radialement en direction du manchon 47.

Ainsi la crémaillère 33 est montée élastiquement pour rattrapage des jeux, suivant une caractéristique importante de l'invention.

A la figure 4, l'élément intermédiaire 5 présente un arbre 80 portant les deux roues 93 et 94 décrites ci-dessus, l'une des extrémités de l'arbre 80 constituant un téton 85 à extrémité arrondie destiné à coopérer avec un épaulement 82 solidaire du couvercle 2.

Les parois 15,16 sont conformées pour supporter, transversalement par rapport à la tige 4, ledit élément intermédiaire 5 et plus précisément ces parois latérales 15,16 présentent des ouvertures respectivement 69,68 pour le passage de l'arbre 80.

Les ouvertures 69,68 consistent ici en des trous, le diamètre du trou 69 est inférieur à celui du trou 68. Le trou 69 est dimensionné pour recevoir l'extrémité libre de l'arbre 80, tandis que le trou 68 est dimensionné pour recevoir une portion épaulée 83 avec des changements de diamètre, que présente l'élément 5 au pied de sa grande roue 94 (figure 4). Le diamètre minimal de la portion 83 et celui du trou 68 complémentaire est supérieur à celui de la petite roue de l'élément 5.

Ainsi l'élément 5 peut être monté par enfilage dans les trous 68,69 et la petite roue de l'élément intermédiaire 5 est disposée radialement en dessous de la crémaillère 33, en sorte qu'un rattrapage de jeu automatique est obtenu grâce aux bossages 35 et au pied 34 dudit entraîneur 3.

Le rendement de la transmission est donc amélioré, ainsi que la précision de l'actionneur.

Le boîtier 1 comporte ici trois zones, à savoir une zone médiane comprenant les parois 15,16,41 (figure 4), 141 (figure 9) et disposées de part et d'autre de ladite zone respectivement, d'une part, une première zone pour le montage d'un circuit imprimé 9 pour la commande et l'alimentation du moteur électrique 8 de l'actionneur, et d'autre part, une troisième zone pour montage d'un bloc vis-roue 6 venant en prise avec l'élément intermédiaire 5.

Plus précisément, le bloc 6 vient en prise par sa roue avec une vis sans fin 7 solidaire de l'arbre de sortie du moteur électrique 8 et par sa vis il engrène avec la grande roue 94 de l'élément intermédiaire 5.

Pour ce faire, la paroi 13 porte en saillie axiale deux potences respectivement 63 et 64. Ces potences 63,64 se prolongent par des languettes 49 élastiques en forme de crochets, lesdites languettes 49 délimitant des creusures 67 pour le montage des extrémités du bloc 6. L'une des potences est solidaire latéralement de la paroi 16, tandis que l'autre est solidaire de nervures décrites ci-après, l'écartement radial (figures 4,9) des potences 63,64 étant fonction du bloc 6.

Ainsi le bloc 6 peut être monté sans jeu par clipsage sur les potences 63,64, ledit bloc s'étendant parallèlement à la paroi 16 et transversalement par rapport à l'élément intermédiaire 5, lequel s'étend également transversalement par rapport à l'entraîneur 3.

Avantageusement, le boîtier 1 étant en matière plastique, toutes les susmentionnées parois 15,16,41, potences 63,64, manchon 47 sont venus de moulage avec la paroi 13 du boîtier 1.

On notera (figures 9 et 4) que les parois 15 et 16 sont reliées entre elles dans leur partie basse par une paroi 40 perpendiculaire aux parois 15,16. Ainsi il est créé une chambre 17 à contour globalement rectangulaire délimitée par les parois 40,41 (figure 4)-141 (figure 9), 15,16 ; le manchon 47 s'étendant à l'intérieur de ladite chambre 17, tandis que les potences 63,64 s'étendent dans la troisième zone latéralement par rapport à la chambre 17 d'un premier côté de celle-ci.

Un manchon 42 est disposé dans la zone centrale radialement en dessous de ladite chambre 17. Ce manchon 42 est ouvert en 90 (figure 9) pour le passage de la roue du bloc 6 et est destiné au montage par enfilage du nez 44 que présente le moteur électrique 8.

Comme mieux visible à la figure 3, ce manchon 42 est porté à solidarisation par la paroi 13, qui présente à ce niveau une excroissance 43 permettant de dégager l'arbre de sortie du moteur 8. A la figure 9, ce manchon 42 est relié par des nervures 66 aux parois 15,16.

En pratique, l'une de ces nervures est dans le prolongement de la paroi 16 en étant d'un seul tenant avec celle-ci, tandis que l'autre nervure est décalée axialement par rapport à la paroi 15.

D'autres nervures 48 sont également prévues et relient les parois 141,15 et le manchon 42 au contour du boîtier 1 et à la paroi frontale 13 de celui-ci.

On notera dans tous les cas que le manchon 42 est en retrait axialement par rapport aux parois 40,41-141, 15,16 et que par l'intermédiaire des nervures il y a formation d'épaulements 65 résultant de ce décalage axial. Ces épaulements 65 au nombre de quatre à la figure 9 permettent de positionner le corps du moteur électrique 8. Le manchon 42 s'étend parallèlement au manchon 47, en étant d'orientation axiale, comme les parois 15,16. Ces parois 15,16, tout comme les parois 41, 141 et le manchon 42, font saillie axialement par rapport aux parois délimitant le contour externe du boîtier 1 et permettant l'assemblage avec le couvercle 2.

Le moteur 8 est monté par enfilage axial de son nez 44 dans le manchon 42.

Certaines des nervures 48 sont dotées d'encoches à extrémité évasée 62, dont le fond est conformé pour recevoir la plaque du circuit 9 dans son épaisseur (figures 9 et 10).

A la figure 4, le boîtier présente également des logements 84 parallèles au manchon 42 et solidaires de la paroi 13.

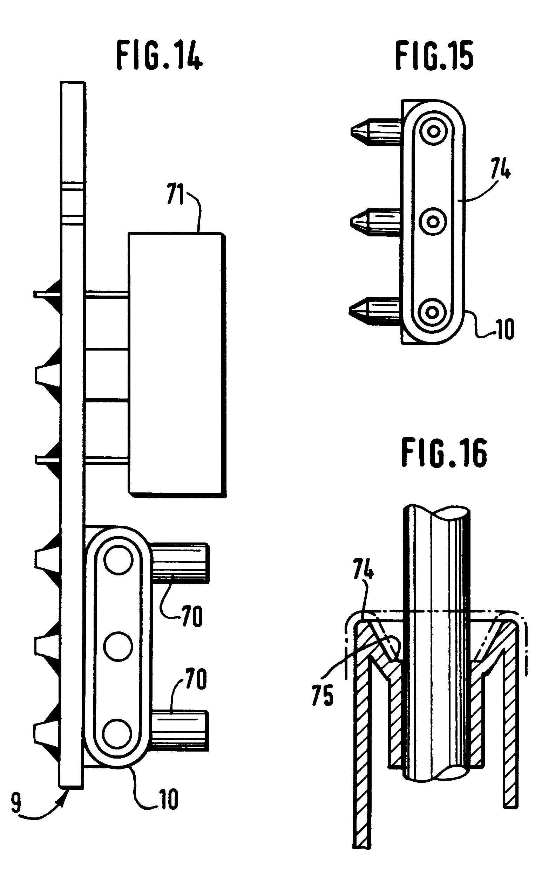

Toutes ces dispositions forment des moyens d'immobilisation et des rails de guidage pour la plaque du circuit 9 et permettent de monter ladite plaque du circuit 9 par enfilage. A la figure 14, cette plaque 9 porte un circuit électrique prédéterminé ainsi qu'un connecteur 10, un potentiomètre 71 et des portions de tube 70 pour connexion électrique du moteur 8. Ladite plaque est conformée pour montage par clipsage du potentiomètre 71 et du connecteur 10 comportant deux séries de trois broches (figure 15) avec formation d'un angle de 90° d'une série à l'autre. Les portions de tube 70 sont propres à être enfilées sur des broches 72, que porte le moteur électrique 8 pour son alimentation. Ces broches 72 s'étendent perpendiculairement au corps du moteur 8 et au manchon 42 (figures 4 et 5). Elles s'étendent dans la zone délimitée par la paroi 15 et la paroi latérale concernée du boîtier 1. On notera que la plaque du circuit 9 est immobilisée axialement, après montage dans ses rails de guidage, par le potentiomètre 71 maintenu par l'arbre 80 de l'élément intermédiaire 5 qui présente ainsi une fonction supplémentaire.

Ainsi au montage il est possible d'assembler extérieurement le circuit 9 au moteur 8 par enfilage des tubes 70 dans les broches 72 et de monter l'ensemble par enfilage axial dans le boîtier 1, la plaque du circuit 9 étant parallèle aux parois 15,16.

Suivant une caractéristique importante de l'invention, le connecteur 10 comporte une lèvre d'étanchéité 74 (figure 15) et porte des broches destinées à traverser le couvercle 2. La lèvre 74 est continue et entoure les broches du connecteur 10. Ces lèvres 74 sont évasées et délimitent une creusure avec un fond 75 traversé à étanchéité par les trois broches (figure 16). Sur les figures 1 et 2 le couvercle 2 est doté d'une excroissance 20 entourant les trois broches du connecteur 10, qui traverse le fond 23 (figure 5) de ladite excroissance 20 ouverte vers l'extérieur. Le couvercle 2 présente également une portion épaulée 21 adjacente à l'excroissance 20. La portion 21 et l'excroissance 20 sont pratiquées dans le fond du couvercle 2.

Ainsi qu'on l'aura compris tous les constituants de l'actionneur, à savoir le circuit imprimé 9 avec le connecteur 10, le moteur 8, le dispositif de transmission mécanique avec son entraîneur 3 et la tige 4 peuvent être montés par avance dans le boîtier 1, et il suffit en final de monter le couvercle 2 par clipsage sur le boîtier 1. Lors de cette opération les broches du connecteur 10 sont admises à traverser les ouvertures du fond 23 et l'épaulement 21 est admis à entrer en contact avec la face postérieure du moteur 8. Lors de cet assemblage le couvercle 2 écrase la lèvre d'étanchéité 74 en matière souple, tel que du santoprène et réalise ainsi l'étanchéité au niveau du connecteur 10.

En outre, le moteur 8 est calé axialement grâce à l'épaulement 21, ledit moteur étant immobilisé axialement par le manchon 42 et ledit épaulement 21.

A la figure 3, la tige 4 présente une extrémité postérieure crantée 52, ici cannelée, et traverse de part en part l'entraîneur 3.

Le fond du couvercle 2 présente un manchon épaulé 22 entourant ladite extrémité postérieure 52. Le manchon 22 saillant est destiné au montage par encliquetage d'un organe de réglage 11, ici un bouton molleté.

L'organe 11 vient en prise avec l'extrémité crantée 52, grâce à des languettes élastiques 53 solidaires dudit bouton. Un élément élastique 24, tel qu'un ressort, entoure lesdites languettes 53.

Ainsi il est formé un limiteur d'effort comme décrit dans le document FR-A-2 643 318, et la position de la tige peut être modifiée initialement par le bouton 11.

Plus précisément lors du réglage initial, moteur 8 et entraîneur 3 immobilisés, le bouton 11 entraîne en rotation l'extrémité crantée 52 de la tige 4, dont le mouvement de rotation est tranformé en mouvement de translation par la rainure 51 et les saillies 31,32 de l'entraîneur 3 immobile.

Le limiteur d'effort est en configuration libre d'engagement, les languettes élastiques 13 qui présentent des bossages propres à coopérer avec les rainures de la tige 4 étant en prise sous l'action du ressort 24 avec l'extrémité 52. En cas de résistance à la translation de la tige, les languettes 13 sautent de crans à crans, et le ressort 24 s'ouvre.

Le manchon 22 qui porte le bouton 11 étant coaxial à la tige 4, l'assemblage de l'actionneur peut se faire ainsi par simple enfilage axial du couvercle 2 sur le boîtier 1, le couvercle 2 ne portant que des organes auxiliaires.

On notera que le montage de la tige dans l'entraîneur 3 se fait par enfoncement à force et venu en prise des saillies 31,32 avec la rainure 51.

En fonctionnement normal le moteur électrique entraîne la vis 7, le bloc 6, l'élément 5, l'entraîneur 3 et la tige 4. On notera que le mouvement de translation de l'entraîneur 3 est transformé en mouvement de translation de la tige 4 grâce à la rainure 51, à la saillie 36 en prise avec la rainure 51 et au cannelures 52, le bouton 11 clipsé empêchant alors une rotation de la tige 4. A chaque position de la tige 4 correspond une position angulaire d'au moins une partie optique du projecteur, tel que le réflecteur de celui-ci.

On notera également que l'arbre 80 de l'élément 5 est admis à être enfilé dans le potentiomètre 71 pour entraînement de celui-ci et immobilisation de la plaque du circuit 9.

Ainsi on monte d'abord le moteur 8 avec son circuit imprimé, puis l'élément 5.

Bien entendu un épaulement 82 est prévu pour immobiliser axialement l'élément 5. Cet épaulement 82 est avantageusement solidaire du couvercle 2 et est propre à coopérer avec l'extrémité ou téton 85 de l'arbre 80, ladite extrémité 85 étant adjacente à la grande roue de l'élément 5.

Ainsi qu'on l'aura compris et qu'il ressort à l'évidence de la description, tous les constituants de l'actionneur, à l'exception du bouton de réglage 11, sont portés par le boîtier 1, et tous ces composants se montent simplement par enfilage axial ou clipsage, le couvercle 2 constituant une pièce de fermeture coiffant le boîtier 1 en assurant l'immobilisation axiale du moteur 8 et l'étanchéité au niveau du connecteur 10. Toute la partie mécanique et le moteur s'étendent dans la deuxième et la troisième zone. Le couvercle 2 a donc un rôle de capot protecteur pour notamment les parois latérales saillantes 15,16 et les constituants de l'actionneur à l'exception du bouton 11.

Bien entendu la présente invention n'est pas limitée aux exemples de réalisation décrits, en particulier les parois 15,16 peuvent être dotées de berceaux pour recevoir l'arbre 80.

L'extrémité de l'arbre 80 adjacente à la grande roue de l'élément 5 peut être montée dans un berceau solidaire du boîtier 1 ou du couvercle 2.

Ainsi l'arbre 80 peut s'étendre en porte-à-faux en étant soutenu par la paroi 16 et ledit berceau. Ledit arbre traversant à jeu la paroi 15.

Les parois latérales 15,16 ne peuvent s'étendre parallèlement l'une à l'autre qu'en partie.

En variante elles peuvent être solidaires du boîtier 1 sans être issues de la paroi frontale de celui-ci, grâce par exemple à des nervures les reliant aux autres parties du boîtier 1.

## Revendications

1. Actionneur, notamment pour la commande d'orientation d'un projecteur de véhicule automobile, comprenant un corps (1,2) comportant un boîtier (1) fermé par un couvercle (2), une tige coulissante (4) de manoeuvre logée dans le corps (1,2) et traversant une paroi frontale (13) du boîtier (1), un moteur électrique réversible (8) monté dans le corps (1,2) pour actionnement de la tige coulissante (4) par l'intermédiaire d'un dispostif de transmission mécanique (3,5,6,7) doté d'un entraîneur (3) de forme creuse avec un alésage interne en prise avec ladite tige (4), caractérisé en ce que le boîtier (1) porte intérieurement en saillie au moins une paroi latérale (15,16), dite par commodité première paroi latérale, et en ce que ladite paroi latérale est conformée pour supporter un élément intermédiaire (5) appartenant au dispositif de transmission mécanique (3,5,6,7) et venant en prise avec l'entraîneur (3), ledit élément intermédiaire (5) s'étendant transversalement par rapport à l'entraîneur (3) et à la tige coulissante (4).

2. Actionneur selon la revendication 1, caractérisé en ce que la paroi frontale (13) du boîtier (1) porte en saillie, à l'intérieur dudit boîtier (1), la première paroi latérale (16) et une deuxième paroi latérale (15), et en ce que les deuxdites parois latérales (15,16) s'étendent axialement de part et d'autre de l'entraîneur (3) et de la tige coulissante (4).

3. Actionneur selon la revendication 1, caractérisé en ce que les deuxdites parois latérales (15,16) sont conformées pour supporter transversalement par rapport à ladite tige coulissante (4) ledit élément intermédiaire (5).

4. Actionneur selon la revendication 2, ou 3, caractérisé en ce que les deuxdites parois latérales (15,16) sont dotées chacune d'une ouverture (69,68) et en ce que ledit élément intermédiaire (5) comporte un arbre (80) traversant lesdites ouvertures (69,68).

5. Actionneur selon la revendication 4, caractérisé en ce que l'arbre (80) porte une petite roue (93), propre à venir en prise avec une crémaillère (33) portée par l'entraîneur (3).

6. Actionneur selon la revendication 4 ou 5, caractérisé en ce que lesdites ouvertures (68,69) consistent en des trous et en ce que le diamètre du trou (69) de ladite seconde paroi (15) est, d'une part, inférieur à celui du trou (68) de ladite première paroi (16) et, d'autre part, dimensionné pour recevoir l'extrémité libre de l'arbre (80) dudit élément intermédiaire.

7. Actionneur selon la revendication 6, caractérisé en ce que ledit élément intermédiaire (5) comporte une portion épaulée (83), dont le diamètre minimal correspond au diamètre de l'ouverture (66) de la première paroi latérale (16) et est supérieur à celui de la petite roue (93) portée par l'arbre (80) de l'élément intermédiaire (5).

8. Actionneur selon l'une quelconque des revendications 5 à 7, caractérisé en ce que la face arrière de l'entraîneur (3) porte une crémaillère (33) reliée par un pied (34) à la partie principale de l'entraîneur (3), et en ce que la petite roue (93) de l'élément intermédiaire (5) est disposée radialement en dessous de la crémaillère (33) pour coopération avec ladite crémaillère (33).

9. Actionneur selon la revendication 8, caractérisé en ce qu'en position diamétralement opposée à la crémaillère (33) l'entraîneur (3) porte au moins un bossage (35) et en ce que le bossage (35) est propre à coopérer avec une paroi (41,141) solidaire de la paroi frontale (13), en sorte qu'un rattrapage de jeu automatique est obtenu grâce au bossage (35) et au pied (34) dudit entraîneur (3).

10. Actionneur selon la revendication 9, caractérisé en ce que l'alésage interne de l'entraîneur (3) comporte des saillies (31,32) inclinées, par l'intermédiaire desquelles il vient en prise avec la tige (4).

11. Actionneur selon l'une quelconque des revendications 2 à 10, caractérisé en ce que le boîtier (1) comporte trois zones, à savoir une zone médiane comportant lesdites première et deuxième parois latérales (15,16) et disposées de part et d'autre de ladite zone médiane respectivement une première zone pour le montage d'un circuit imprimé (9) pour la commande et l'alimentation du moteur électrique (8) de l'actionneur, et une troisième zone pour montage d'un bloc vis-roue (6) appartenant audit dispositif de transmission mécanique (3,5,6,7) et venant en prise avec l'élément intermédiaire (5) de celui-ci.

12. Actionneur selon la revendication 11, caractérisé en ce que le bloc vis-roue (6) vient en prise par sa roue avec une vis sans fin (7) solidaire de l'arbre de sortie du moteur (8) et par sa vis il engrène avec une grande roue que comporte l'élément intermédiaire (5).

13. Actionneur selon la revendication 12, caractérisé en ce que la paroi frontale (13) du boîtier (1) porte en saillie, pour montage du bloc vis-roue (6) du dispositif de transmission mécanique (3,5,6,7), deux potences (63,64) s'étendant dans ladite troisième zone, et en ce que lesdites potences (63,64) se prolongent par des languettes (49).

14. Actionneur selon la revendication 13, caractérisé en ce que ledit bloc vis-roue (6) est monté sur lesdites potences (63,64) en étant admis à coopérer avec des creusures (67) pratiquées dans les languettes (49).

15. Actionneur selon la revendication 14, caractérisé en ce que l'une des potences (63) est solidaire latéralement de la première paroi latérale (16).

16. Actionneur selon l'une quelconque des revendications 11 à 15, caractérisé en ce que les deuxdites parois latérales (15,16) délimitent une chambre (17), et en ce que l'entraîneur (3) est monté coulissant axialement dans un premier manchon (47) d'orientation axiale s'étendant à l'intérieur de ladite chambre (17).

17. Actionneur selon la revendication 16, caractérisé en ce que la face arrière du premier manchon (47) d'orientation axiale est dotée d'une rainure (61) ouverte axialement pour coopération avec un bossage (36) solidaire de l'entraîneur (3) et blocage en rotation dudit entraîneur (3) par rapport au boîtier (1) et en ce que ledit premier manchon (47) est solidaire de la paroi frontale (13) du boîtier (1).

18. Actionneur selon l'une des revendications 11 à 17, caractérisé en ce que les deuxdites parois latérales (15,16) délimitent une chambre (17) et en ce qu'un second manchon (42) d'orientation axiale solidaire de la paroi frontale (13) du boîtier (1) est disposé radialement en dessous de ladite chambre (17) pour montage par enfilage axial du nez (44) que présente le moteur électrique (8).

19. Actionneur selon la revendication 18, caractérisé en ce que le manchon (42) est ouvert pour le passage de la roue du bloc vis-roue (6) et est destiné au montage par enfilage axial du nez (44), que présente le moteur électrique (8).

20. Actionneur selon la revendication 18 ou 19, caractérisé en ce que le second manchon (42) est en retrait axialement par rapport aux parois latérales (15,16).

21. Actionneur selon la revendication 20, caractérisé en ce que le second manchon (42) est relié par des nervures, d'une part aux parois latérales (15,16) et, d'autre part, au contour du boîtier, et en ce que par l'intermédiaire desdites nervures et du fait du retrait axial du manchon par rapport aux parois latérales (15,16) il y a formation d'épaulements (65) pour positionnement du corps du moteur électrique (8).

22. Actionneur selon l'une quelconque des revendications 11 à 21, caractérisé en ce que le circuit imprimé (9) porte un connecteur (10) doté d'une lèvre d'étanchéité (74) et portant des broches destinées à traverser un fond (23) solidaire du couvercle (2).

23. Actionneur selon la revendication 22, caractérisé en ce que le boîtier (1) porte des moyens d'immobilisation et de guidage (62,84) pour la plaque, que présente le circuit imprimé (9).

24. Actionneur selon la revendication 23, caractérisé en ce que la plaque du circuit imprimé (9) porte des tubes (70) propres à coopérer avec des broches (72), que porte en saillie le moteur électrique (8).

25. Actionneur selon l'une quelconque des revendications 22 à 24, caractérisé en ce que ledit circuit imprimé (9) porte un potientiomètre (71) et en ce que ledit potentimètre (71) est maintenu par l'extrémité de l'arbre (80) que présente l'élément intermédiaire (5) dans ladite première zone.

26. Actionneur selon l'une quelconque des revendications 1 à 25, caractérisé en ce que le couvercle (2) constitue une pièce de fermeture coiffant le boîtier (1) en assurant l'immobilisation axiale du moteur électrique (8) à la faveur d'une portion épaulée (21) que présente son fond (23) à cet effet.

27. Actionneur selon les revendications 22 et 26 caractérisé en ce que le fond (23) du couvercle est doté d'une excroissance (20) ouverte vers l'extérieur et traversée par des broches d'un connecteur (10), et en ce que le couvercle (2) assure l'étanchéité du connecteur (10) par écrasement de sa lèvre d'étanchéité (74).

28. Actionneur selon la revendication 26 ou 27, caractérisé en ce que l'excroissance (20) est adjacente à la position épaulée (21) et en ce que le fond (23) du couvercle (2) présente un manchon épaulé saillant (22) entourant l'extrémité postérieure crantée (52) que présente la tige coulissante (4), ledit manchon (22) étant propre au montage par encliquetage d'un organe de réglage (11) venant en prise avec ladite extrémité postérieure crantée (52).

## Patentansprüche

1. Steuereinrichtung der Lichtstrahlrichtung eines Fahrzeugscheinwerfers, in der Ausführung mit einem Körper (1, 2), der ein durch einen Deckel (2) verschlossenes Gehäuse (1) umfaßt, mit einer in dem Körper (1, 2) angeordneten und durch eine Stirnwand (13) des Gehäuses (1) hindurchgehenden verschiebbaren Betätigungsstange (4) sowie mit einem in dem Körper (1, 2) eingebauten Elektroreversiermotor (8) für den Antrieb der verschiebbaren Stange (4) über eine mechanische Übertragungsvorrichtung (3, 5, 6, 7), die einen hohlförmigen Mitnehmer (3) mit einer mit der Stange (4) in Eingriff stehenden Innenbohrung umfaßt , **durch** **gekennzeichnet**, daß das Gehäuse (1) innen vorspringend mindestens eine Seitenwand (15, 16) trägt, die der Einfachheit halber als erste Seitenwand bezeichnet wird, und daß diese Seitenwand ausgeformt ist, um ein Zwischenelement (5) zu haltern, das zu der mechanischen Übertragungsvorrichtung (3, 5, 6, 7) gehört und das mit dem Mitnehmer (3) in Eingriff steht, wobei dieses Zwischenelement (5) quer im Verhältnis zu dem Mitnehmer (3) und der verschiebbaren Stange (4) verläuft.

2. Steuereinrichtung nach Anspruch 1 , **dadurch** **gekennzeichnet**, daß die Stirnwand (13) des Gehäuses (1) vorspringend im Innern des Gehäuses (1) die erste Seitenwand (16) und eine zweite Seitenwand (15) trägt und daß sich die beiden Seitenwände (15, 16) axial auf beiden Seiten des Mitnehmers (3) und der verschiebbaren Stange (4) erstrecken.

3. Steuereinrichtung nach Anspruch 1 , **dadurch** **gekennzeichnet**, daß die beiden Seitenwände (15, 16) ausgeformt sind, um das Zwischenelement (5) quer im Verhältnis zu der verschiebbaren Stange (4) zu haltern.

4. Steuereinrichtung nach Anspruch 2 oder 3 , **dadurch** **durch** **gekennzeichnet**, daß die Seitenwände (15, 16) jeweils mit einer Öffnung (69, 68) versehen sind und daß das Zwischenelement (5) eine Welle (80) umfaßt, die durch diese Öffnungen (69, 68) hindurchgeht.

5. Steuereinrichtung nach Anspruch 4 , **dadurch gekennzeichnet**, daß an der Welle (80) ein kleines Rad (93) angebracht ist, das mit einer an dem Mitnehmer (3) angebrachten Zahnstange (33) in Eingriff treten kann.

6. Steuereinrichtung nach Anspruch 4 oder 5 , **dadurch** **gekennzeichnet**, daß die Öffnungen (68, 69) aus Löchern bestehen und daß der Durchmesser des Loches (69) der zweiten Wand (15) einerseits kleiner als der Durchmesser des Loches (68) der ersten Wand (16) ist und andererseits für die Aufnahme des freien Endes der Welle (80) des Zwischenelements bemessen ist.

7. Steuereinrichtung nach Anspruch 6 , **dadurch** **gekennzeichnet**, daß das Zwischenelement (5) einen abgesetzten Abschnitt (83) umfaßt, dessen kleinster Durchmesser dem Durchmesser der Öffnung (66) der ersten Seitenwand (16) entspricht und größer als als der Durchmesser des kleinen Rads (93) ist, das an der Welle (80) des Zwischenelements (5) angebracht ist.

8. Steuereinrichtung nach einem der Ansprüche 5 bis 7, **dadurch** **gekennzeichnet**, daß die Rückseite des Mitnehmers (3) eine Zahnstange (33) trägt, die über einen Fuß (34) mit dem Hauptteil des Mitnehmers (3) verbunden ist, und daß das kleine Rad (93) des Zwischenelements (5) radial unterhalb der Zahnstange (33) für das Zusammenwirken mit dieser Zahnstange (33) angeordnet ist.

9. Steuereinrichtung nach Anspruch 8 , **dadurch** **gekennzeichnet**, daß der Mitnehmer (3) in einer zu der Zahnstange (33) diametral entgegengesetzten Position mindestens einen Vorsprung (35) aufweist und daß dieser Vorsprung (35) mit einer Wand (41, 141) zusammenwirken kann, die fest mit der Stirnwand (13) verbunden ist, so daß eine selbsttätige Spielnachstellung anhand des Vorsprungs (35) und des Fußes (34) des Mitnehmers (3) herbeigeführt wird.

10. Steuereinrichtung nach Anspruch 9 , **dadurch** **gekennzeichnet**, daß die Innenbohrung des Mitnehmers (3) geneigte Ansätze (31, 32) umfaßt, über die sie mit der Stange (4) in Eingriff steht.

11. Steuereinrichtung nach einem der Ansprüche 2 bis 10, **dadurch gekennzeichnet**, daß das Gehäuse (1) drei Bereiche umfaßt, und zwar einen mittleren Bereich mit der ersten und zweiten Seitenwand (15, 16) sowie, auf beiden Seiten dieses mittleren Bereichs angeordnet, einerseits einen ersten Bereich für den Einbau der gedruckten Schaltung (9) zur Steuerung und Stromversorgung des Elektromotors (8) der Steuereinrichtung und andererseits einen dritten Bereich für den Einbau eines Schnecken-Rad-Blocks (6), der zu der mechanischen Übertragungsvorrichtung (3, 5, 6, 7) gehört und mit dessen Zwischenelement (5) in Eingriff steht.

12. Steuereinrichtung nach Anspruch 11 , **dadurch** **gekennzeichnet**, daß der Schnecken-Rad-Block (6) über sein Rad mit einer Schnecke (7) in Eingriff steht, die fest mit der Abtriebswelle des Motors (8) verbunden ist, während er über seine Schnecke mit einem großen Rad Eingriff steht, das zu dem Zwischenelement (5) gehört.

13. Steuereinrichtung nach Anspruch 12 , **dadurch** **gekennzeichnet**, daß die Stirnwand (13) des Gehäuses (1) vorspringend für den Einbau des Schnecken-Rad-Blocks (6) der mechanischen Übertragungsvorrichtung (3, 5, 6, 7) zwei Arme (63, 64) trägt, die sich in den dritten Bereich erstrecken, und daß diese Arme (63, 64) durch Zungen (49) verlängert werden.

14. Steuereinrichtung nach Anspruch 13 , **dadurch** **gekennzeichnet**, daß der Schnecken-Rad-Block (6) an den Armen (63, 64) eingebaut wird, wobei er mit Vertiefungen (67) zusammenwirken kann, die in den Zungen (49) vorgesehen sind.

15. Steuereinrichtung nach Anspruch 14 , **dadurch** **gekennzeichnet**, daß einer der Arme (63) seitlich fest mit der ersten Seitenwand (16) verbunden ist.

16. Steuereinrichtung nach einem der Ansprüche 11 bis 15, **dadurch gekennzeichnet**, daß die beiden Seitenwände (15, 16) eine Kammer (17) begrenzen und daß der Mitnehmer (3) axial verschiebbar in einer ersten Hülse (47) in axialer Ausrichtung eingebaut ist, die sich in das Innere der Kammer (17) erstreckt.

17. Steuereinrichtung nach Anspruch 16 , **dadurch** **gekennzeichnet**, daß die Rückseite der ersten Hülse (47) in axialer Ausrichtung mit einer axial offenen Nut (61) für das Zusammenwirken mit einem fest mit dem Mitnehmer (3) verbundenen Vorsprung (36) und die Drehsicherung des Mitnehmers (3) im Verhältnis zu dem Gehäuse (1) versehen ist und daß die erste Hülse (47) fest mit der Stirnwand (13) des Gehäuses (1) verbunden ist.

18. Steuereinrichtung nach einem der Ansprüche 11 bis 17, **dadurch gekennzeichnet**, daß die beiden Seitenwände (15, 16) eine Kammer (17) begrenzen und daß eine fest mit der Stirnwand (13) des Gehäuses (1) verbundene zweite Hülse (42) in axialer Ausrichtung radial unterhalb dieser Kammer (17) für den durch axiales Aufstecken erfolgenden Einbau der an dem Elektromotor (8) vorgesehenen Nase (44) angeordnet ist.

19. Steuereinrichtung nach Anspruch 18 , **dadurch** **gekennzeichnet**, daß die Hülse (42) für den Durchgang des Rads des Schnecken-Rad-Blocks (6) offen ist und für den durch axiales Aufstecken erfolgenden Einbau der an dem Elektromotor (8) vorgesehenen Nase (44) bestimmt ist.

20. Steuereinrichtung nach Anspruch 18 oder 19, **dadurch gekennzeichnet**, daß die zweite Hülse (42) im Verhältnis zu den Seitenwänden (15, 16) axial zurückspringend angeordnet ist.

21. Steuereinrichtung nach Anspruch 20 , **dadurch** **gekennzeichnet**, daß die zweite Hülse (42) durch Rippen einerseits mit den Seitenwänden (15, 16) und andererseits mit dem Umriß des Gehäuses verbunden ist und daß durch diese Rippen und den axialen Rücksprung der Hülse im Verhältnis zu den Seitenwänden (15, 16) die Bildung von Schultern (65) für die Positionierung des Körpers des Elektromotors (8) erfolgt.

22. Steuereinrichtung nach einem der Ansprüche 11 bis 21, **dadurch** **gekennzeichnet**, daß die gedruckte Schaltung (9) einen Steckverbinder (10) mit einer Dichtlippe (74) und mit Stiften trägt, die für den Durchgang durch einen fest mit dem Deckel (2) verbundenen Boden (23) bestimmt sind.

23. Steuereinrichtung nach Anspruch 22 , **dadurch** **gekennzeichnet**, daß an dem Gehäuse (1) Sicherungs- und Führungsmittel (62, 84) für die Platte der gedruckten Schaltung (9) vorgesehen sind.

24. Steuereinrichtung nach Anspruch 23 , **dadurch** **gekennzeichnet**, daß an der Platte der gedruckten Schaltung (9) Rohre (70) für das Zusammenwirken mit Stiften (72) vorgesehen sind, die sich vorspringend an dem Elektromotor (8) befinden.

25. Steuereinrichtung nach einem der Ansprüche 22 bis 24, **dadurch gekennzeichnet**, daß die gedruckte Schaltung (9) ein Potentiometer (71) trägt und daß dieses Potentiometer (71) durch das Ende der Welle (80) gehalten wird, die das Zwischenelement (5) in dem ersten Bereich aufweist.

26. Steuereinrichtung nach einem der Ansprüche 1 bis 25, **dadurch gekennzeichnet**, daß der Deckel (2) ein Verschlußteil bildet, welches das Gehäuse (1) überdeckt, wobei es die axiale Sicherung des Elektromotors (8) anhand eines abgesetzten Abschnitts (21) gewährleistet, der dazu an seinem Boden (23) vorgesehen ist.

27. Steuereinrichtung nach Anspruch 22 und 26 , **dadurch gekennzeichnet**, daß der Boden (23) des Deckels eine nach außen offene Ausstülpung (20) aufweist, durch welche die Stifte eines Steckverbinders (10) hindurchgehen, und daß der Deckel (2) die Abdichtung des Steckverbinders (10) durch das Zusammendrücken seiner Dichtlippe (74) gewährleistet.

28. Steuereinrichtung nach einem der Ansprüche 26 oder 27, **dadurch gekennzeichnet**, daß die Ausstülpung (20) an den abgesetzten Abschnitt (21) angrenzt und daß der Boden (23) des Deckels (2) eine vorspringende abgesetzte Hülse (22) aufweist, die das hintere Rastende (52) der verschiebbaren Stange (4) umgibt, wobei die Hülse (22) für den mittels Verrastung erfolgenden Einbau eines Regelorgans (11) vorgesehen ist, das mit dem hinteren Rastende (52) in Eingriff steht.

## Claims

1. An actuator, especially for the orientation control of a motor vehicle headlamp, comprising a body (1, 2) including a housing (1) closed by a cover (2), a sliding actuating rod (4) mounted in the body (1, 2) and extending through a front wall (13) of the housing (1), a reversible electric motor mounted in the body (1, 2) for actuation of the sliding rod (4) through a mechanical transmission device (3, 5, 6, 7) having a hollow drive element (3) with an internal bore in engagement with the said rod (4), characterised in that the housing (1) carries at least one internally projecting lateral wall (15, 16), referred to for convenience as a first lateral wall, and in that the said lateral wall is so configured as to support an intermediate element (5) which is part of the mechanical transmission device (3, 5, 6, 7) and which engages with the drive element (3), the said intermediate element (5) extending transversely with respect to the drive element (3) and sliding rod (4).

2. An actuator according to Claim 1, characterised in that the front wall (13) of the housing (1) carries, projecting within the said housing (1), the first lateral wall (16) and a second lateral wall (15), and in that the two said lateral walls (15, 16) extend axially on either side of the drive element (3) and sliding rod (4).

3. An actuator according to Claim 1, characterised in that the two said lateral walls (15, 16) are so configured as to support the said intermediate element (5) transversely with respect to the said sliding rod (4).

4. An actuator according to Claim 2 or Claim 3, characterised in that each of the two said lateral walls (15, 16) is formed with an opening (69, 68), and in that the said intermediate element (5) includes a shaft (80) extending through the said openings (69, 68).

5. An actuator according to Claim 4, characterised in that the shaft (80) carries a small wheel (93) which is adapted to engage with a rack (33) carried by the drive element (3).

6. An actuator according to Claim 4 or Claim 5, characterised in that the said openings (68, 69) consist of holes, and in that the diameter of the hole (69) in the said second wall (15) is, firstly, smaller than that of the hole (68) in the said first wall (16) and, secondly, dimensioned so as to receive the free end of the shaft (80) of the said intermediate element.

7. An actuator according to Claim 6, characterised in that the said intermediate element (5) includes a shouldered portion (83), the minimum diameter of which corresponds to the diameter of the hole (66) in the first lateral wall (16), and is greater than that of the small wheel (93) carried by the shaft (80) of the intermediate element (5).

8. An actuator according to any one of Claims 5 to 7, characterised in that the rear face of the drive element (3) carries a rack (33), which is connected through a foot (34) to the main portion of the drive element (3), and in that the small wheel (93) of the intermediate element (5) is disposed radially inward of the rack (33) for cooperation with the said rack (33).

9. An actuator according to Claim 8, characterised in that in a position diametrically opposed to the rack (33), the drive element (3) carries at least one boss (35), and in that the boss (35) is adapted to cooperate with a wall (41, 141) which is fixed to the front wall (13), in such a way that clearance is automatically taken up by virtue of the boss (35) and of the foot (34) of the said drive element (3).

10. An actuator according to Claim 9, characterised in that the internal bore of the drive element (3) has inclined projections (31, 32), by means of which it comes into engagement with the rod (4).

11. An actuator according to any one of Claims 2 to 10, characterised in that the housing (1) has three zones, namely a middle zone which includes the said first and second lateral walls (15, 16), and, disposed on either side of the said central zone respectively, a first zone for mounting a printed circuit (9) for the control and power supply of the electric motor (8) of the actuator, and a third zone for the mounting of a worm and wormwheel unit (6) which is part of the said mechanical transmission device (3, 5, 6, 7) and which makes engagement with the intermediate element (5) of the latter.

12. An actuator according to Claim 11, characterised in that the worm and wormwheel unit (6) engages through its wormwheel with a worm (7) which is fixed to the output shaft of the motor (8), and through its worm it meshes with a large wheel which is comprised in the intermediate element (5).

13. An actuator according to Claim 12, characterised in that the front wall (13) of the housing (1) carries, for mounting the worm and wormwheel unit (6) of the mechanical transmission device (3, 5, 6, 7), two projecting bracket elements (63, 64) extending into the said third zone, and in that the said bracket elements (63, 64) are extended by tongues (49).

14. An actuator according to Claim 13, characterised in that the said worm and wormwheel unit (6) is mounted on the said bracket elements (63, 64), being arranged to cooperate with recesses (67) formed in the tongues (49).

15. An actuator according to Claim 14, characterised in that one of the recesses (63) is laterally fixed to the first lateral wall (16).

16. An actuator according to any one of Claims 11 to 15, characterised in that the two said lateral walls (15, 16) delimit a chamber (17), and in that the drive element (3) is mounted for axial sliding movement in a first axially orientated sleeve (47) extending within the said chamber (17).

17. An actuator according to Claim 16, characterised in that the rear face of the axially orientated first sleeve (47) has a groove (61) which is open axially for cooperation with a boss (36) fixed to the drive element (3), and for preventing rotation of the said drive element (3) with respect to the housing (1), and in that the said first sleeve (47) is fixed to the front wall (13) of the housing (1).

18. An actuator according to one of Claims 11 to 17, characterised in that the two said lateral walls (15, 16) delimit a chamber (17), and in that an axially orientated second sleeve (42) fixed to the front wall (13) of the housing (1) is disposed radially inwardly of the said chamber (17), for the fitting, by axial insertion, of the nose (44) of the electric motor (8).

19. An actuator according to Claim 18, characterised in that the sleeve (42) is open for the passage of the worm wheel of the worm and wormwheel unit (6), and is adapted for the fitting, by axial insertion, of the nose (44) of the electric motor (8).

20. An actuator according to Claim 18 or Claim 19, characterised in that the second sleeve (42) is in axially withdrawn relationship with the lateral walls (15, 16).

21. An actuator according to Claim 20, characterised in that the second sleeve (42) is connected by means of ribs, firstly to the lateral walls (15, 16), and secondly to the profile of the housing, and in that, via the said ribs and by virtue of the axially withdrawn relationship of the sleeve with respect to the lateral walls (15, 16), shoulders (65) are defined for positioning the body of the electric motor (8).

22. An actuator according to any one of Claims 11 to 21, characterised in that the printed circuit (9) carries a connector (10) having a sealing lip (74), and carrying connecting pins adapted to extend to a base (23) fixed with respect to the cover (2).

23. An actuator according to Claim 22, characterised in that the housing (1) carries immobilising and guide means (62, 84) for the wafer of the printed circuit (9).

24. An actuator according to Claim 23, characterised in that the wafer of the printed circuit (9) carries tubes (70) which are adapted to cooperate with connecting pins (72) carried by and projecting from the electric motor (8).

25. An actuator according to any one of Claims 22 to 24, characterised in that the said printed circuit (9) carries a potentiometer (71), and in that the said potentiometer (71) is retained by that end of the shaft (80) which is comprised in the intermediate element (5) in the said first zone.

26. An actuator according to any one of Claims 1 to 25, characterised in that the cover (2) constitutes a closure member covering the housing (1), immobilising the electric motor (8) axially by means of a shouldered portion (21) with which its base (23) is formed for that purpose.

27. An actuator according to Claims 22 and 26, characterised in that the base (23) of the cover has a shroud portion (20) which is open outwardly and through which connecting pins of a connector (10) pass, and in that the cover (2) seals the connector (10) by compression of its sealing lip (74).

28. An actuator according to Claim 26 or Claim 27, charactewrised in that the shroud portion (20) is adjacent to the shouldered portion (21), and in that the base (23) of the cover (2) has a projecting shouldered sleeve (22) which surrounds the posterior recessed end (52) of the sliding rod (4), with the said sleeve (22) being adapted for the snap-fitting of an adjusting member (11) which engages with the said recessed posterior end (52).
